# EUROPÄISCHE PATENTSCHRIFT

(11) **EP 3 965 458 B1**
(45) Veröffentlichungstag und Bekanntmachung des Hinweises auf die Patenterteilung: **08.11.2023**
(21) Anmeldenummer: 20194455.0
(22) Anmeldetag: 03.09.2020
(51) Int. Cl.: H04W 24/04

(54) **TECHNIKEN ZUR AUTOMATISIERTEN ENTSTÖRUNG VON NETZZUGANGSEINHEITEN**
TECHNIQUES FOR AUTOMATED TROUBLESHOOTING OF NETWORK ACCESS UNITS
TECHNIQUES DE SUPPRESSION AUTOMATISÉE DES INTERFÉRENCES DES UNITÉS D'ACCÈS AU RÉSEAU

(43) Veröffentlichungstag der Anmeldung: 09.03.2022
(73) Patentinhaber: Deutsche Telekom AG, 53113 Bonn (DE)
(72) Erfinder: Zunftmeister, Florian, 79843 Löffingen (DE)
(74) Vertreter: Braun-Dullaeus Pannen Emmerling Patent- & Rechtsanwaltspartnerschaft mbB

(56) Entgegenhaltungen:
- EP-A1- 3 091 780
- WO-A1-2006/071289
- US-A1- 2014 287 742
- US-A1- 2017 318 483

## Beschreibung

Je weiter die Digitalisierung der Welt voranschreitet, desto mehr Menschen verbinden sich mit einer immer größeren Anzahl von Nutzerendgeräten mit Kommunikationsnetzen, insbesondere dem Internet als Kommunikationsnetz.

Eine Vielzahl von alltäglichen Abläufen, z.B. Einkaufen, Bankgeschäfte, Kommunikation etc., werden heutzutage über digitale Kanäle abgewickelt. Ein besonderer Vorteil dieser digitalen Kanäle ist in der Regel ihre hohe Geschwindigkeit mit der Vorgänge ausgeführt werden. Der Zugang zum Internet wird für die Nutzer durch eine Vielzahl von Netzzugangseinheiten bereitgestellt in die sich die Nutzerendgeräte einloggen und die quasi eine Verbindung zu anderen Elementen, insbesondere Servern, des Kommunikationsnetzes vermitteln. Insbesondere sind für den mobilen Zugang ins Internet mittels Nutzerendgeräten zahlreiche Netzzugangseinheiten, beispielsweise sogenannte Basisstationen (BTS), Wi-Fi-Hotspots und oder W-LAN-Router, mit sich zum Teil überlappenden Funkbereichen über die ganze Welt hinweg verteilt.

In diesem Zusammenhang beschreibt die EP 1 562 390 A1 eine Breitbandzugangsverbindung, die über eine kabelgebundene Verbindung übertragen wird und die durch eine kabellose Verbindung gesichert ist, um einen Kommunikationskanal mit hoher Verfügbarkeit zu erzeugen. Ein Verbindungsüberwachungsmechanismus überwacht den Betrieb der drahtgebundenen Verbindung und erzeugt ein Fehlersignal, wenn eine spezifizierte Unterleistung, ein Ausfall oder ein Überlastungszustand der Breitband-drahtgebundenen Zugangsverbindung festgestellt wird. Ein Datenvermittlungsmechanismus schaltet den über die Benutzerschnittstelle empfangenen Benutzerverkehr zwischen der drahtgebundenen Verbindung und der drahtlosen Verbindung gemäß dem Fehlersignal um, damit eine Anbindung zum Internet weiterhin gewährleisten ist.

Gerade, da die Nutzer in vielen Fällen auf die schnellen Abläufe der digitalen Welt angewiesen sind, ist es besonders ärgerlich, wenn solche Netzzugangseinheiten Funktionsstörungen aufweisen und wenn diese Funktionsstörungen erst nach relativ langer Zeit durch einen Techniker, der zu der entsprechenden Netzzugangseinheit hinfährt, behoben werden.

Demnach ist es die Aufgabe der Erfindung, Techniken zur schnellen automatisierten Entstörung von Netzzugangseinheiten anzugeben.

Gelöst wird diese Aufgabe mit den Merkmalen der unabhängigen Ansprüche.

Gemäß einem ersten Aspekt der Erfindung ist ein Verfahren zum automatisierten Entstören von Netzzugangseinheiten, insbesondere von Mobilfunk-Basisstationen (BTS) bei fehlerhafter Breitbandanbindung angegeben. Das Verfahren ist jedoch auch zum automatischen Entstören von W-LAN-Routern oder WiFi Hotspots geeignet. Das Verfahren umfasst die folgenden Schritte:
- Detektion einer Fehlfunktion einer fehlerhaften Netzzugangseinheit und Starten eines Wiederherstellungsalgorithmus basierend auf der Detektion der Fehlfunktion. Die fehlerhafte Netzzugangseinheit kann ihre Fehlfunktion vorzugsweise selbst feststellen. Diese Fehlfunktion kann beispielsweise durch einen regelmäßigen Diagnosevorgang oder auch ereignisbasiert oder durch einen Trigger festgestellt werden. Insbesondere ist unter der Fehlfunktion ein Ausfall der Anbindung der Netzzugangseinheit zum Kernnetz, also insbesondere zur Breitbandanbindung, zu verstehen. Der Wiederherstellungsalgorithmus umfasst folgende Schritte:
   ∘ Absuchen nach verfügbaren Funkdiensten durch die fehlerhafte Netzzugangseinheit, wobei die verfügbaren Funkdienste durch zumindest eine funktionsfähige Netzzugangseinheit bereitgestellt werden. Unter verfügbaren Funkdiensten sind beispielsweise GSM, UMTS, LTE und/oder 5G Funkdienste zu verstehen, deren Funkbereich zumindest bis an die fehlerhafte Netzzugangseinheit heranreicht. Bereitgestellt werden diese Funkdienste durch andere Netzzugangseinheiten, die vorzugsweise demselben Betreiber zugeordnet sind, wie die fehlerhafte Netzzugangseinheit. Ist allerdings keine Netzzugangseinheit desselben Betreibers innerhalb des Funkbereichs verfügbar, kann auch eine Netzzugangseinheit eines anderen Betreibers ausgewählt werden.
   ∘ Auswahl eines Funkdienstes einer funktionsfähigen Netzzugangseinheit. Je nach Netzabdeckung, kann es vorkommen, dass Funkdienste mehrerer funktionsfähiger Netzzugangseinheiten bis an die fehlerhafte Netzzugangseinheit heranreichen. In diesem Fall wird vorzugsweise eine Netzzugangseinheit, unter der Mehrzahl der funktionsfähigen Netzzugangseinheiten, für das Verfahren ausgewählt. Nachstehend wird diese auch als "ausgewählte Netzzugangseinheit" bezeichnet.
   ∘ Verbindungsaufbau zwischen der fehlerhaften Netzzugangseinheit und der ausgewählten Netzzugangseinheit und Initiieren eines "Recovery Links". Vorzugsweise wird der Verbindungsaufbau und die Initiierung des "Recovery Links" durch die fehlerhafte Netzzugangseinheit eingeleitet. Der "Recovery Link" kann auch als Wiederherstellungsverbindung bezeichnet werden. Durch die Initiierung des "Recovery Links" wird ein Wiederherstellungsprozess der fehlerhaften Netzzugangseinheit gestartet.;
   ∘ Austausch von Recovery-Daten, auch als Wiederherstellungsdaten bezeichnet, über den "Recovery Link" zwischen der fehlerhaften und der funktionsfähigen Netzzugangseinheit. Die Recovery-Daten umfassen Daten, die von einem Prozessor der fehlerhaften Netzzugangseinheit ausgeführt werden können, und die geeignet sind die funktionsunfähige Netzzugangseinheit wiederherzustellen, sodass diese vorzugsweise wieder gemäß ihrer Standardparameter funktioniert;
   ∘ Beenden des Wiederherstellungsalgorithmus bei erfolgreicher Wiederherstellung der zuvor fehlerhaften Netzzugangseinheit. Das Beenden des Wiederherstellungsalgorithmus kann beispielsweise durch die wiederhergestellte Netzzugangseinheit mittels eines entsprechenden Signals getriggert werden. Dieses Signal veranlasst beide Netzzugangseinheiten in der Folge wieder in den normalen Betriebsmodus zurückzukehren. Zusätzlich kann das "Erfolgs-Signal" zusammen mit einem Diagnosebericht auch an den Netzwerkbetreiber zur weiteren Untersuchung übermittelt werden.

Das erfindungsgemäße Verfahren bietet also den Vorteil, dass sich Netzzugangseinheiten automatisiert gegenseitig wiederherstellen können. Dies ermöglicht ein rasches und flächendeckendes Beheben von Fehlfunktionen, sodass Nutzer nur für einen möglichst geringen Zeitraum auf ihre Internetanbindung verzichten müssen.

Vorzugsweise wird der Betreiber der fehlerhaften Netzzugangseinheit informiert, wenn keine erfolgreiche Wiederherstellung möglich ist.

Dies bietet den Vorteil, dass der Betreiber einen Techniker zu der fehlerhaften Netzzugangseinheit senden kann, wenn keine automatisierte erfolgreiche Wiederherstellung möglich ist. In diesem Fall wird die Wiederherstellung zwar länger dauern als bei dem automatisierten Verfahren, aber es ist ebenfalls sichergestellt, dass die Information über die fehlerhafte Netzzugangseinheit nicht verloren geht und deren Reparatur beauftragt werden kann.

Bevorzugt wird der Recovery Link zwischen den Netzzugangseinheiten nach Beendigung des Wiederherstellungsalgorithmus wieder abgebaut.

Dies bietet den Vorteil, dass die entsprechenden Ressourcen des Recovery Links wieder für andere Anwendungen, insbesondere für den Verbindungsaufbau mit Nutzerendgeräten, freigegeben werden.

Gemäß einer Ausführungsform schaltet die wiederhergestellte Netzzugangseinheit und/oder die ausgewählte Netzzugangseinheit wieder in den Standard-Betriebsmodus zurück.

Hierdurch wird der Vorteil erreicht, dass die Netzzugangseinheit wieder wie vor dem fehlerhaften Ereignis funktioniert. Insbesondere wird die Breitbandanbindung zum Internet wieder aktiviert, sodass sich Nutzerendgeräte wieder über die Netzzugangseinheit mit dem Internet verbinden können. Im Bereich der Mobilfunktechnik wird hierdurch insbesondere die Verbindung zur Vermittlungstechnik des Mobilfunkbetreibers wieder aktiviert. Wenn nachstehend an anderen Stellen eine Breitbandanbindung zum Internet beschrieben ist, so steht dies - falls es technisch nicht ausgeschlossen ist - auch stellvertretend für die Anbindung von Mobilfunkgeräten an die Vermittlungstechnik des Mobilfunkbetreibers im Falle von Mobilfunk.

In einer bevorzugten Ausführungsform wird die Fehlfunktion durch eine Signalunterbrechung "Loss of Signal" zum Internet bzw. zur Vermittlungstechnik des Mobilfunkbetreibers angezeigt. Die Netzzugangseinheit kann die Signalunterbrechung dadurch detektieren, dass kein Datenfluss mehr vom Internet/Vermittlungstechnik in Richtung der Netzzugangseinheit und insbesondere in Richtung der Nutzerendgeräte stattfindet. Die Netzzugangseinheit stellt in der Regel den Sendebetrieb mit den Nutzerendgeräten ein, wenn keine Verbindung mehr zur Vermittlungstechnik besteht. Dies wird insbesondere dann festgestellt, wenn die Nutzerendgeräte ihrerseits regelmäßig Daten in Richtung Internet senden, aber keine Daten aus dem Internet an die Nutzerendgeräte zurückgesendet werden. Mobilfunkgeräte sind nicht mehr mit der BTS verbunden, da diese den Sendebetrieb für alle Dienste (z.B. LTE) auf Grund der fehlerhaften Anbindung eingestellt hat.

Aber auch eine dauerhafte Reduzierung des Datenflusses kann ein Hinweis auf eine Fehlfunktion der Netzzugangseinheit bezüglich ihrer Breitbandanbindung sein.

Dies bietet den Vorteil, dass eine Fehlfunktion zuverlässig erkannt werden kann.

Bevorzugt wird der Funkdienst mit der besten Empfangsstärke und/oder dem besten Datendurchsatz ausgewählt oder dass alternativ der Funkdienst ausgewählt wird mit dem die wenigsten Nutzerendgeräte verbunden sind.

Wird der Funkdienst mit der besten Empfangsstärke und/oder dem besten Datendurchsatz ausgewählt, wird dadurch ermöglicht, dass die Wiederherstellung möglichst schnell ausgeführt werden kann, da eine maximale Datenmenge übertragen werden kann und das Risiko einer Störung vermindert wird. Wird alternativ der Funkdienst mit den wenigsten Nutzerendgeräten ausgewählt, bietet das den Vorteil, dass eine möglichst geringe Anzahl von Nutzern mit ihren Nutzerendgeräten durch den Wiederherstellungsprozess bei ihrer Internetnutzung beeinträchtigt wird.

Vorzugsweise richtet sich eine Antenneneinheit der fehlerhaften Netzzugangseinheit zum Aufbau des "Recovery Links" von einer Standardausrichtung zu der ausgewählten Netzzugangseinheit aus und/oder es richtet sich eine Antenneneinheit der ausgewählten Netzzugangseinheit von einer Standardausrichtung zu der fehlerhaften Netzzugangseinheit aus. Diese Anpassung der Antenneneinheiten kann in der Regel durch ein "Aufsenken" der Antenneneinheit verwirklicht werden.

Dies bietet den Vorteil, dass die jeweiligen Signalstärken verbessert werden können.

Die Antenneneinheit der ausgewählten Netzzugangseinheit und/oder der zuvor fehlerhaften Netzzugangseinheit können sich nach dem Abbau des "Recovery Links" gemäß ihrer Standardausrichtung ausrichten.

Dies bietet den Vorteil, dass die jeweilige Ausrichtung der Netzzugangseinheit bei der Standardausrichtung wieder für die Kommunikation mit den Nutzerendgeräten optimiert ist.

Bevorzugt wird der "Recovery Link" für alle anderen Netzteilnehmer, insbesondere für Nutzerendgeräte, blockiert.

Dies bietet zum einen den Vorteil, dass der Wiederherstellungsprozess möglichst ungestört ablaufen kann und zum anderen, dass sich Nutzerendgeräte nicht mit der fehlerhaften Netzzugangseinheit verbinden, die in ihrem aktuellen Status keinen Anschluss zum Internet ermöglicht. Für den Mobilfunk gilt insbesondere, dass die Netzzugangseinheit erst bei erfolgreicher Verbindung zur Vermittlungstechnik des Betreibers den Sendebetrieb der Dienste wieder aufnimmt.

Bevorzugt wird der "Recovery Link" als sichere Verbindung ausgestaltet. Eine Möglichkeit ist es, die sichere Verbindung basierend auf einem Hashverfahren und eines "Shared Secrets" (zum Beispiel der Seriennummer der Netzzugangseinheit/Systembaugruppe) einzurichten.

In einer Ausführungsform ist die ausgewählte Netzzugangseinheit mit einem Server eines Netzwerkproviders, insbesondere mit einem Server des Betreibers der Netzzugangseinheit, verbunden.

Dies bietet den Vorteil, dass der Betreiber durch die ausgewählte Netzzugangseinheit von der fehlerhaften Netzzugangseinheit Kenntnis erlangen kann.

Zweckmäßigerweise umfassen die ausgetauschten "Recovery-Daten" ein Neustartsignal, Diagnoseinformationen und/oder einen der Fehlfunktion angepassten Wiederherstellungscode. Hierbei können die Recovery-Daten, also die Wiederherstellungsdaten, an einen Prozessor der fehlerhaften Netzzugangseinheit übertragen werden und dort, insbesondere in Form eines Programmcodes, entsprechende Steuerbefehle auslösen. Vorteilhaft wird hierdurch ermöglicht, dass die Netzzugangseinheit effektiv wiederhergestellt werden kann. Die einfachste Form der Recovery-Daten ist das Neustartsignal, welches in der fehlerhaften Netzzugangseinheit einen Steuerbefehl zum "Reset" auslöst. Häufig ist ein solcher "Reset" ausreichend, um die Fehler der Netzzugangseinheit zu beheben. Alternativ, besonders nach einem erfolglosen Neustartsignal, ist es aber auch möglich, dass die fehlerhafte Netzzugangseinheit ein Diagnoseprogramm ausführt oder dass die ausgewählte Netzzugangseinheit bestimmte Diagnoseinformationen der fehlerhaften Netzzugangseinheit abfragt und diese Diagnoseinformationen an den Server zur weiteren Auswertung sendet. Basierend auf diesen Informationen kann eine künstliche Intelligenz des Servers oder ein Techniker, der diese Diagnose Informationen bearbeitet, einen speziell angepassten Wiederherstellungscode erstellen, der den Fehler behebt.

Gemäß einem zweiten Aspekt der Erfindung wird ein Verfahren zum automatisierten Entstören von Netzzugangseinheiten, insbesondere von Mobilfunk-Basisstationen (BTS) bei fehlerhafter Breitbandanbindung, angegeben, bei dem die "Initiative" zum Aufbau des "Recovery Links" nunmehr nicht von der fehlerhaften Netzzugangseinheit, sondern über eine funktionsfähige benachbarte Netzzugangseinheit ausgeht, wobei die Vermittlungstechnik oder der Server eingerichtet sind um diesen Vorgang triggern. Die vorstehend, gemäß dem ersten Aspekt der Erfindung, beschriebenen Merkmale gelten auch für den zweiten Aspekt der Erfindung, sofern sie sich nicht technisch ausschließen.

Das Verfahren gemäß dem zweiten Aspekt der Erfindung umfasst die folgenden Schritte:
- Detektion einer Fehlfunktion einer fehlerhaften Netzzugangseinheit durch in einem Netzwerk vorhandene Vermittlungstechnik_und Starten eines Wiederherstellungsalgorithmus basierend auf der Detektion der Fehlfunktion, wobei der Wiederherstellungsalgorithmus insbesondere auf einem Server abläuft und folgende Schritte umfasst;
   ∘ Lokalisieren der fehlerhaften Netzzugangseinheit;
   ∘ Absuchen nach verfügbaren Funkdiensten im Funkbereich der fehlerhaften Netzzugangseinheit, wobei die verfügbaren Funkdienste durch zumindest eine funktionsfähige Netzzugangseinheit bereitgestellt werden;
   ∘ Auswahl eines Funkdienstes einer funktionsfähigen Netzzugangseinheit;
   ∘ Verbindungsaufbau zwischen der fehlerhaften Netzzugangseinheit und der ausgewählten Netzzugangseinheit und Initiieren eines "Recovery Links", wobei der Verbindungsaufbau von der ausgewählten Netzzugangseinheit initiiert wird;
   ∘ Austausch von Recovery-Daten über den "Recovery Link" zwischen der fehlerhaften und der funktionsfähigen Netzzugangseinheit;
   ∘ Beenden des Wiederherstellungsalgorithmus bei erfolgreicher Wiederherstellung der zuvor fehlerhaften Netzzugangseinheit.

Dies bietet den Vorteil, dass der Wiederherstellungsprozess auch von anderen Netzzugangseinheiten initiiert werden kann. Dies ist von besonderem Vorteil, falls die fehlerhafte Netzzugangseinheit so stark beschädigt ist, dass diese den Wiederherstellungsalgorithmus nicht selbst starten kann. Zu diesem Zwecke kann es vorteilhaft sein in den Netzzugangseinheiten ein separates Wiederherstellungsmodul vorzusehen, das "logisch" von der übrigen Funktionsweise der Netzzugangseinheiten separiert betrieben wird und auch dann ausgeführt werden kann, wenn die Netzzugangseinheit im Übrigen fehlerhaft ist. Die funktionierende Netzzugangseinheit könnte in diesem Fall den Recovery Link direkt über das Wiederherstellungsmodul initiieren und so den Wiederherstellungsprozess starten.

Gemäß einem dritten Aspekt der Erfindung ist eine Netzzugangseinheit angegeben, die zur Ausführung des vorstehend beschriebenen Verfahrens ausgebildet ist. Die Netzzugangseinheit umfasst:
eine erste Kommunikationsschnittstelle eingerichtet zum Ausbilden einer Datenverbindung mit einem Netzwerk, insbesondere einer Breitbandanbindung zum Internet;
eine zweite Kommunikationsschnittstelle mit einer Antenneneinheit eingerichtet zur Ausbildung einer Datenverbindung mit anderen Netzzugangseinheiten und/oder Nutzerendgeräten;
einen Prozessor eingerichtet zur Steuerung und zur Durchführung der Schritte des vorstehend beschriebenen Verfahrens.

Gemäß einem vierten Aspekt der Erfindung ist ein Computerprogrammprodukt angegeben, wobei das Computerprogrammprodukt Befehle umfasst, die bei der Ausführung des Programms durch einen Prozessor diesen veranlassen, die Schritte eines der vorstehend beschrieben Verfahren auszuführen.

Gemäß einem fünften Aspekt der Erfindung ist ein System aus zumindest zwei Netzzugangseinheiten angegeben, die zur Ausführung eines der vorstehend beschriebenen Verfahren ausgebildet sind.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt den Normalfall von einer Mehrzahl an funktionierenden Mobilfunk-Basisstationen, die einen Breitband-Zugang zum Internet ermöglichen.
- Fig. 2:: zeigt den Ausfall einer der Mobilfunk-Basisstationen aus Fig. 1.

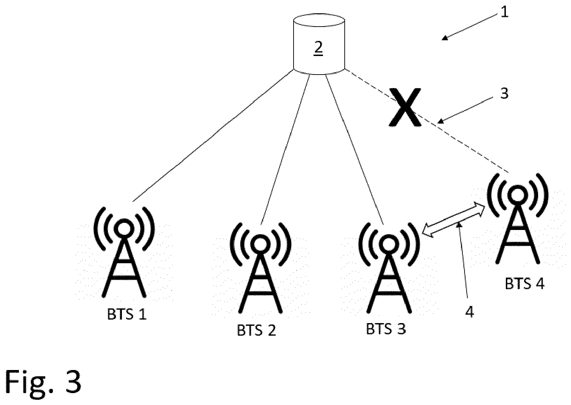

- Fig. 3:: zeigt die Initiierung eines "Recovery Links" zur Wiederherstellung der fehlerhaften Mobilfunk-Basisstationen aus Fig. 2.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

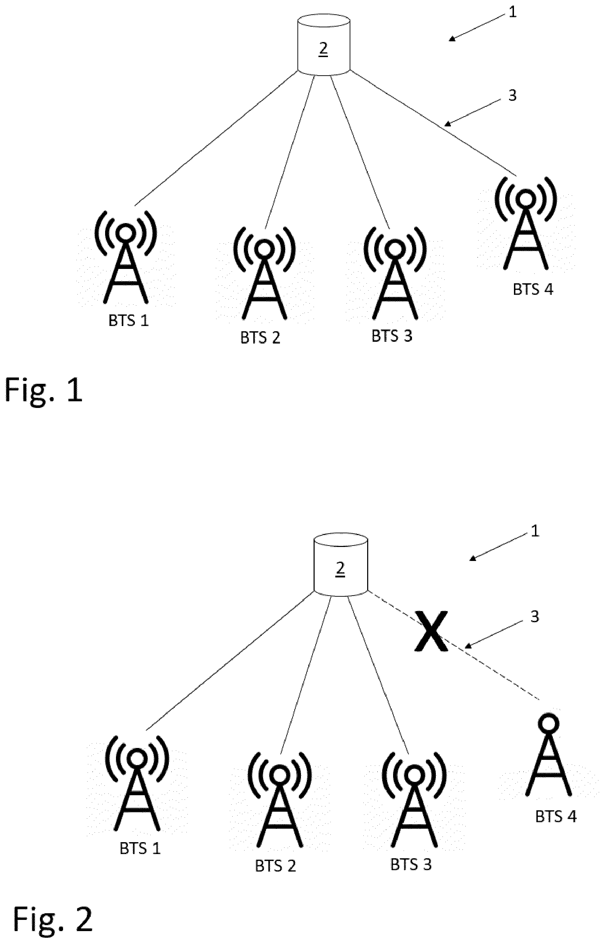

Fig. 1 zeigt ein System 1, das vier Base-Stations, respektive Basisstationen BTS 1-4 aufweist, die jeweils über eine ihnen zugeordnete Datenverbindung 3 mit einem Server 2 eines Kommunikationsnetzwerks verbunden sind. Insbesondere kann es sich bei den Datenverbindungen 3 um Breitbandverbindungen handeln, wobei der Server 2 auch eine Vermittlungstechnik eines Netzwerkproviders bereitstellt. Bei dem Kommunikationsnetzwerk handelt es sich insbesondere um das Internet.

Fig. 1 zeigt den Normalfall bei dem alle Basisstationen 1-4 fehlerfrei funktionieren, sodass sich Nutzer mit ihren Nutzerendgeräten, insbesondere mit ihren Smartphones, über eine der Basisstation 1-4 Daten mit dem Internet austauschen können.

Fig. 2 illustriert den Fall einer Störung der Basisstation 4 (BTS 4). In diesem Fall ist die Verbindung der Basisstation 4 zum Internet unterbrochen, sodass sich ein Nutzer nicht mehr mit seinem Smartphone über die Basisstation 4 mit dem Internet verbinden kann.

Um die Störung der Basisstation 4 möglichst schnell beheben zu können, wird nachstehend das erfindungsgemäße Verfahren zum automatisierten Entstören von Basisstationen beim Ausfall der Verbindung zum Internet beschrieben.

Die Basisstation 4 detektiert die gestörte Verbindung zum Internet beispielsweise durch einen entsprechenden Signalverlust. Die Basisstation 4 kann diese Information als einen Alarm absenden, der als Trigger fungiert und einen Wiederherstellungsalgorithmus startet.

Die Basisstation 4 führt in einem nächsten Schritt einen Scan des Funkfeldes nach entsprechenden Funkdiensten, wie etwa GSM, UMTS, LTE und/oder 5G, in ihrer "Nachbarschaft" durch. Detektiert die Basisstation 4 mehrere mögliche Funkdienste, so wählt die Basisstation 4 den Funkdienst mit der besten Empfangsstärke bzw. dem besten Datendurchsatz aus (z. B. LTE 1800).

In Fig. 4 ist gezeigt, dass die Basisstation 4 hierzu die Basisstation 3 auswählt. Zur Verbesserung der Signalstärke können die Antenneneinheiten der jeweiligen Basisstationen 3, 4 zueinander ausgerichtet werden.

Die Basisstation 4 meldet sich in einem nächsten Schritt an der Basisstation 3 an und baut einen Recovery Link zur Wiederherstellung der Funktionsfähigkeit auf. Alternativ kann auch die Basisstation 3 den Recovery Link initiieren, indem die Vermittlungstechnik den Ausfall der Basisstation 4 bemerkt und die Basisstation 3 zum Aufbau des Recovery Links mit der Basisstation 4 auffordert. Der Recovery Link kann als sichere Verbindung mittels einer Hash-Funktion und einem "Shared Secret" (beispielsweise der Seriennummer der Systembaugruppe, welche beiden Seiten bekannt ist) ausgebildet sein.

Als nächstes wird der Recovery Link für andere Teilnehmer, also insbesondere für die Nutzer von Nutzerendgeräten, blockiert, sodass eine exklusive Verbindung zwischen der ausgefallenen Basisstation 4 und der funktionsfähigen Basisstation 3 auf dem Funkdienst, ähnlich einer Richtfunkverbindung, besteht.

Nun kann ein Datenaustausch zur Entstörung der Basisstation 4 über den aufgebauten Recovery Link ausgeführt werden. Insbesondere kann ein Neustart-Signal an einen Prozessor der Basisstation 4 übertragen werden, der entsprechende Steuerbefehle zum Neustart bewirkt.

Die Basisstation 4 kann ein Diagnoseprogramm durchführen, welches feststellt, ob die Entstörung erfolgreich verlaufen ist. In diesem Fall findet ein "Clearing des Alarms der Basisstation 4" statt und der Wiederherstellungsalgorithmus wird beendet und der Recovery Link wird abgebaut.

Die Basisstation 4 aktiviert nun wieder ihren normalen Betriebsmodus mit der nunmehr wieder funktionierenden Anbindung zum Internet.

Alternativ kann das Verfahren auch für eine kurzfristige Bereitstellung von Mobilfunkversorgung beim "Disaster Recovery Management" oder in der "Eventversorgung" Anwendung finden. Prinzipiell ist dieses Verfahren für alle Bereiche der Mobilfunkversorgung anwendbar und der Aufbau der Infrastruktur ist unabhängig vom jeweiligen Dienst, wie etwa GSM, UMTS, LTE oder 5G.

## Patentansprüche

1. Verfahren zum automatisierten Entstören von Netzzugangseinheiten umfassend die folgenden Schritte:
• Detektion einer Fehlfunktion einer fehlerhaften Netzzugangseinheit und Starten eines Wiederherstellungsalgorithmus basierend auf der Detektion der Fehlfunktion, wobei der Wiederherstellungsalgorithmus folgende Schritte umfasst;
∘ Absuchen nach verfügbaren Funkdiensten durch die fehlerhafte Netzzugangseinheit, wobei die verfügbaren Funkdienste durch zumindest eine funktionsfähige Netzzugangseinheit bereitgestellt werden;
∘ Auswahl eines Funkdienstes einer funktionsfähigen Netzzugangseinheit;
∘ Verbindungsaufbau unter Nutzung des ausgewählten Funkdienstes zwischen der fehlerhaften Netzzugangseinheit und der ausgewählten Netzzugangseinheit und Initiieren eines "Recovery Links";
∘ Austausch von Recovery-Daten über den "Recovery Link" zwischen der fehlerhaften und der funktionsfähigen Netzzugangseinheit;
∘ Beenden des Wiederherstellungsalgorithmus bei erfolgreicher Wiederherstellung der zuvor fehlerhaften Netzzugangseinheit.

2. Verfahren nach Anspruch 1, **dadurch gekennzeichnet, dass** der Betreiber der fehlerhaften Netzzugangseinheit informiert wird, wenn keine erfolgreiche Wiederherstellung möglich ist.

3. Verfahren nach einem der vorhergehenden Ansprüche, **dadurch gekennzeichnet, dass** der "Recovery Link" zwischen den Netzzugangseinheiten wieder abgebaut wird.

4. Verfahren nach einem der vorhergehenden Ansprüche, **dadurch gekennzeichnet, dass** die wiederhergestellte Netzzugangseinheit in den Standard-Betriebsmodus zurückschaltet.

5. Verfahren nach einem der vorhergehenden Ansprüche, **dadurch gekennzeichnet, dass** die Fehlfunktion durch eine Signalunterbrechung zur Vermittlungstechnik eines Mobilfunkbetreibers oder zum Internet angezeigt wird.

6. Verfahren nach einem der vorhergehenden Ansprüche, **dadurch gekennzeichnet, dass** der Funkdienst mit der besten Empfangsstärke und/oder dem besten Datendurchsatz ausgewählt wird oder dass alternativ der Funkdienst ausgewählt wird mit dem die wenigsten Nutzerendgeräte verbunden sind.

7. Verfahren nach einem der vorhergehenden Ansprüche, **dadurch gekennzeichnet, dass** sich eine Antenneneinheit der fehlerhaften Netzzugangseinheit zum Aufbau des "Recovery Links" von einer Standardausrichtung zu der ausgewählten Netzzugangseinheit ausrichtet und/oder dass sich eine Antenneneinheit der ausgewählten Netzzugangseinheit von einer Standardausrichtung zu der fehlerhaften Netzzugangseinheit ausrichtet.

8. Verfahren nach Anspruch 7, **dadurch gekennzeichnet, dass** sich die Antenneneinheit der ausgewählten Netzzugangseinheit und/oder der zuvor fehlerhaften Netzzugangseinheit nach dem Abbau des "Recovery Links" gemäß ihrer Standardausrichtung ausrichten.

9. Verfahren nach einem der vorhergehenden Ansprüche, **dadurch gekennzeichnet, dass** der "Recovery Link" für alle anderen Netzteilnehmer, insbesondere für Nutzerendgeräte, blockiert wird.

10. Verfahren nach einem der vorhergehenden Ansprüche, **dadurch gekennzeichnet, dass** der "Recovery Link" als sichere Verbindung ausgestaltet wird.

11. Verfahren nach einem der vorhergehenden Ansprüche, **dadurch gekennzeichnet, dass** die ausgewählte Netzzugangseinheit mit einem Server eines Netzwerkproviders verbunden ist.

12. Verfahren nach einem der vorhergehenden Ansprüche, **dadurch gekennzeichnet, dass** die ausgetauschten "Recovery-Daten" ein Neustartsignal, Diagnoseinformationen und/oder einen der Fehlfunktion angepassten Wiederherstellungscode umfassen.

13. Netzzugangseinheit eingerichtet zum automatisierten Entstören umfassend
eine erste Kommunikationsschnittstelle eingerichtet zum Ausbilden einer Datenverbindung mit einem Netzwerk;
eine zweite Kommunikationsschnittstelle mit einer Antenneneinheit eingerichtet zur Ausbilden einer Datenverbindung mit anderen Netzzugangseinheiten und/oder Nutzerendgeräten;
einen Prozessor eingerichtet zur Steuerung und zur Durchführung der Schritte eines Verfahrens nach den Ansprüchen 1-12.

14. Computerprogrammprodukt, umfassend Befehle, die bei der Ausführung des Programms durch einen Prozessor diesen veranlassen, die Schritte des Verfahrens gemäß einem der Ansprüche 1-12 auszuführen.

## Claims

1. A method for automated troubleshooting of network access units, comprising the following steps:
• detecting a malfunction of a defective network access unit and starting a recovery algorithm based on the detection of the malfunction, wherein the recovery algorithm comprises the following steps;
∘ searching for available radio communication services by the defective network access unit, wherein the available radio communication services are provided by at least one functioning network access unit;
∘ selection of a radio communication service of a functioning network access unit;
∘ establishment of a connection between the defective network access unit and the selected network access unit using the selected radio communication service and initiating a "recovery link";
∘ exchanging recovery data between the defective and the functioning network access units via the "recovery link";
∘ ending the recovery algorithm upon successful restoration of previously defective network access unit.

2. The method according to Claim 1, **characterized in that** the operator of the defective network access unit is informed if successful restoration is not possible.

3. The method according to one of the preceding claims, **characterized in that** the "recovery link" between the network access units is terminated again.

4. The method according to any one of the preceding claims, **characterized in that** the restored network access unit switches back into the standard operating mode.

5. The method according to any one of the preceding claims, **characterized in that** the malfunction is indicated by an interruption of a signal to the switching technology of a mobile network operator or to the internet.

6. The method according to any one of the preceding claims, **characterized in that** the radio communication service with the best reception strength and/or the best data throughput is selected, or that alternatively the radio communication service to which the fewest user end devices are connected is selected.

7. The method according to any one of the preceding claims, **characterized in that** in order to establish the "recovery link" an antenna unit of the defective network access unit aligns itself from a default alignment to the selected network access unit, and/or that an antenna unit of the selected network access unit aligns itself from a default alignment to the defective network access unit.

8. The method according to Claim 7, **characterized in that** after the "recovery link" is terminated the antenna unit of the selected network access unit and/or of the previously defective network access unit align/s itself/themselves according to its/their default alignment.

9. The method according to any one of the preceding claims, **characterized in that** the "recovery link" is blocked for all other network subscribers, in particular for user end devices.

10. The method according to any one of the preceding claims, **characterized in that** the "recovery link" is configured as a secure connection.

11. The method according to any one of the preceding claims, **characterized in that** the selected network access unit is connected to a server of a network provider.

12. The method according to any one of the preceding claims, **characterized in that** the "recovery data" exchanged comprise a restart signal, diagnostic information and/or a recovery code designed to reflect the malfunction.

13. A network access unit designed for automated troubleshooting, comprising
a first communication interface designed to establish a data connection with a network;
a second communication interface with an antenna unit designed to establish a data connection with other network access units and/or user end devices;
a processor designed to control and carry out the steps of a method according to Claims 1 - 12.

14. A computer software product comprising commands that when the program is run by a processor cause the processor to execute the steps of the method according to any one of Claims 1 - 12.

## Revendications

1. Procédé de suppression automatisée des interférences d'unités d'accès au réseau comprenant les étapes suivantes consistant à :
• détecter un dysfonctionnement d'une unité d'accès au réseau défaillante et démarrer un algorithme de récupération basé sur la détection du dysfonctionnement, dans lequel l'algorithme de récupération comprend les étapes suivantes consistant à :
∘ rechercher des services radio disponibles par l'unité d'accès au réseau défaillante, dans lequel les services radio disponibles sont fournis par au moins une unité d'accès au réseau fonctionnelle ;
∘ sélectionner un service radio d'une unité d'accès au réseau fonctionnelle ;
∘ établir la connexion à l'aide du service radio sélectionné entre l'unité d'accès au réseau défaillante et l'unité d'accès au réseau sélectionnée et lancer une « liaison de récupération » ;
∘ échanger des données de récupération via la « liaison de récupération » entre les unités d'accès au réseau défaillante et fonctionnelle ;
∘ mettre fin à l'algorithme de récupération en cas de récupération réussie de l'unité d'accès au réseau précédemment défaillante.

2. Procédé selon la revendication 1, **caractérisé en ce que** l'opérateur de l'unité d'accès au réseau défaillante est informé si une restauration réussie n'est pas possible.

3. Procédé selon une des revendications précédentes, **caractérisé en ce que** la « liaison de récupération » entre les unités d'accès au réseau est à nouveau établie.

4. Procédé selon une des revendications précédentes, **caractérisé en ce que** l'unité d'accès au réseau rétablie repasse en mode de fonctionnement standard.

5. Procédé selon une des revendications précédentes, **caractérisé en ce que** la défaillance est indiquée par une interruption du signal pour la technologie de commutation d'un opérateur mobile ou l'Internet.

6. Procédé selon une des revendications précédentes, caractérisé ce que le service radio est sélectionné avec la meilleure puissance de réception et/ou le meilleur débit de données ou, en variante, le service radio auquel le moins de terminaux d'utilisateurs sont connectés est sélectionné.

7. Procédé selon une des revendications précédentes, **caractérisé en ce qu'**une unité d'antenne de l'unité d'accès au réseau défaillante utilisée pour établir la « liaison de récupération » est orientée d'une orientation standard vers l'unité d'accès au réseau sélectionnée et/ou qu'une unité d'antenne l'unité d'accès au réseau sélectionnée est orientée d'une orientation standard vers l'unité d'accès au réseau défaillante.

8. Procédé selon la revendication 7, **caractérisé en ce que** l'unité d'antenne de l'unité d'accès au réseau sélectionnée et/ou de l'unité d'accès au réseau précédemment défaillante sont orientées selon leur orientation par défaut après la désactivation de la « liaison de récupération ».

9. Procédé selon une des revendications précédentes, **caractérisé en ce que** la « liaison de récupération » est bloquée pour tous les autres participants au réseau, en particulier pour les terminaux d'utilisateurs.

10. Procédé selon une des revendications précédentes, **caractérisé en ce que** la « liaison de récupération » est conçue comme une connexion sécurisée.

11. Procédé selon une des revendications précédentes, **caractérisé en ce que** l'unité d'accès au réseau sélectionnée est connectée à un serveur d'un fournisseur de réseau.

12. Procédé selon une des revendications précédentes, **caractérisé en ce que** les « données de récupération » échangées comprennent un signal de redémarrage, des informations de diagnostic et/ou un code de récupération adapté à la défaillance.

13. Unité d'accès au réseau configurée pour une suppression automatisée complète des interférences comprenant
une première interface de communication mise en place pour établir une connexion de données avec un réseau ;
une deuxième interface de communication avec une unité d'antenne configurée pour établir une connexion de données avec d'autres unités d'accès au réseau et/ou terminaux d'utilisateurs ;
un processeur configuré pour commander et exécuter les étapes d'un procédé selon les revendications 1 - 12.

14. Produit de programme informatique comprenant des instructions, qui lors l'exécution du programme par un processeur amènent celui-ci à exécuter les étapes du procédé selon une des revendications 1 - 12.
